# EUROPÄISCHE PATENTSCHRIFT

(11) **EP 3 056 955 B1**
(45) Veröffentlichungstag und Bekanntmachung des Hinweises auf die Patenterteilung: **24.04.2019**
(21) Anmeldenummer: 15154743.7
(22) Anmeldetag: 11.02.2015
(51) Int. Cl.: G05B 19/418

(54) **Planungs- und Engineering-Verfahren, -Software-Tool und -System für eine prozesstechnische Anlage**
Planning and engineering method, software tool and system for a processing assembly
Procédé de planification et d'ingénierie, outil et système de logiciel pour une installation technique de processus

(43) Veröffentlichungstag der Anmeldung: 17.08.2016
(73) Patentinhaber: Siemens Aktiengesellschaft, 80333 München (DE)
(72) Erfinder: Drumm, Oliver, 76344 Eggenstein-Leopoldshafen (DE); Lenz, Henning, 76135 Karlsruhe (DE); Lutz, Benjamin, 76327 Pfinztal (DE); Wolf, Gerrit, 76187 Karlsruhe (DE)

(56) Entgegenhaltungen:
- EP-A2- 2 244 140
- WO-A1-2009/089849
- DE-A1-102008 040 440
- US-A1- 2007 005 266

## Beschreibung

Die Erfindung betrifft ein Planungs- und Engineering-Verfahren für eine prozesstechnische Anlage.

Die Erfindung betrifft ferner ein entsprechendes Planungs- und Engineering-Software-Tool, ein Planungs- und Engineering-System für eine prozesstechnische Anlage, ein Automatisierungssystem mit einem solchen Planungs- und Engineering-System sowie einen nach dem Verfahren, mit dem Software-Tool oder mit dem System erstellten Funktionsbaustein.

Um das Engineering einer Automatisierung einer prozesstechnischen Anlage durchzuführen, wird in einem Planungs- und Engineering-System mittels eines entsprechenden Software-Tools üblicherweise in einem ersten Schritt die Struktur der Anlage erfasst und mittels eines Anlagenplanungswerkzeugs ein Fließschema der Anlage durch Verknüpfung von grafischen Prozessobjekten erstellt. Die grafischen Prozessobjekte repräsentieren die funktionalen, d. h. die bedien- und beobachtbaren Einrichtungen der Anlage wie z. B. Sensoren, Motoren, Pumpen, Ventile, Dosierer und Regler oder aber auch Gruppen solcher Einrichtungen, die in einem engeren Zusammenhang stehen, wie z. B. die Trockengruppe einer Papiermaschine oder die Kühlstrecke einer Stranggussanlage, zu verstehen. Die grafischen Prozessobjekte sind zumeist als standardisierte Bausteine in Bibliotheken enthalten und werden mittels eines geeigneten Editors auf einer Projektierungsoberfläche nach technologischen Gesichtspunkten platziert und miteinander verschaltet.

Das prozessleittechnische (PLT) Engineering erfolgt mittels eines PLT-Engineeringwerkzeugs auf der Grundlage von Funktionsbausteinen, die unterschiedliche Automatisierungsfunktionen in Form von Software beinhalten. Die Funktionsbausteine sind zumeist als vorgefertigte und getestete Bausteintypen für wiederkehrende Funktionen in leittechnischen Bibliotheken organisiert. Von diesem Bausteintypen können beliebig viele Instanzobjekte mit individuellen Ausprägungen erstellt und mittels eines Editors über Bildsymbole auf einer Projektierungsoberfläche per Drag & Drop zu einem Funktionsplan der Anlage verknüpft werden. Zu jedem Prozessobjekt korrespondiert ein Automatisierungs-Funktionsbaustein, der die Automatisierungsfunktion des Objektes beschreibt und ggf. aus mehreren Funktionsbausteinen zusammengesetzt ist.

Nachdem alle Funktionen im Funktionsplan erstellt worden sind, übersetzt das Engineering-System die Software der Funktionsbausteine in ein für Automatisierungsgeräte der Anlage lesbaren Steuerprogramm (Maschinencode), das in die Automatisierungsgeräte geladen und dort im Rahmen der Steuerung des technischen Prozesses ausgeführt wird.

Um feststellen zu können, ob das Engineering der Automatisierung erfolgreich war oder um es zu optimieren, können in einem separaten Testwerkzeug Testbedingungen festgelegt und in einem Simulationswerkzeug eine Simulation mindestens eines Tests unter den Testbedingungen durchgeführt werden. In einer simulierten Umgebung wird der Prozess, oder ein Teilprozess, durch Simulationsmodelle der involvierten Prozessobjekte virtuell nachgebildet. Das Simulationswerkzeug erzeugt Signale zu möglichen Ereignissen und Szenarien, die im Anlagenbetrieb auftreten könnten. Ein derartiges Simulationswerkzeug ist beispielsweise unter der Bezeichnung SIMIT der Siemens AG bekannt.

Die erwähnten Anlagenplanungs-, Engineering-, Test- und Simulations-Werkzeuge können einzeln oder kombiniert ausgebildet sein.

Das vorstehend beschriebene Planungs- und Engineering-Verfahren, -Software-Tool und -System für eine prozesstechnische Anlage ist im Wesentlichen aus der WO 2009/089849 A1 bekannt.

Aus der US 2007/005266 A1 ist ein Automatisierungssystem für eine prozesstechnische Anlage bekannt, das zum Zwecke der Zustandsüberwachung (Condition Monitoring) der Anlage Prozessparameter und Prozessmesswerte erfasst und mittels Korrelation und statistischer Verfahren auswertet. Dabei können u. a. Stoff- und Energieströme und -bilanzen berechnet werden.

Aus der DE 10 2008 040440 A1 ist ein Planungs- und Engineering-Verfahren, -Software-Tool und -System für eine Fertigungslinie bekannt, das um eine Energieeffizienzplanung ergänzt ist. Da die Leistungsaufnahmen der Komponenten der Fertigungslinie bekannt sind, kann für jeden Vorgang in der Fertigungslinie die benötigte Energie als Funktion der Fertigungs-Taktzeiten geplant werden. Eine Detaillierung unterschiedlicher Energieverläufe kann über Modelle erfolgen. Die Energieeffizienzplanung kann während des Betriebs der Fertigungsanlage anhand von Messungen der Taktzeit und des Energieverbrauchs der Komponenten noch optimiert werden.

Die Entwicklung einer energieoptimalen prozesstechnischen Anlage steht in der Prioritätenliste häufig hinter den eigentlichen Engineering-Anforderungen des Prozesses. Die Auslegung der elektrischen Sicherungen und Kabelstränge für die Stromversorgung der Anlage richtet sich maßgeblich nach den gesetzlich vorgeschriebenen Maximallasten und den Angaben über die Energieaufnahme der einzelnen angeschlossenen Anlagenkomponenten in den zugehörigen Datenblättern. Die energetische Auslegung der Anlage erfolgt daher ohne Kenntnis des Verbrauchsverhaltens der Anlagenkomponenten. In der Regel kennt der Anlagenbetreiber die Verteilung der Energiekosten in der Anlage nicht oder nur sehr ungenau. Diese Information wird auch nicht von dem Leitsystem der Anlage zur Verfügung gestellt. Es kann lediglich der gesamte Energieverbrauch der Anlage an der Stelle der Einspeisung durch einen Zähler gemessen werden. Es gibt vereinzelt auch Anlagenkomponenten, die während ihrer Laufzeit Verbrauchswerte liefern; solche Komponenten sind jedoch immer teurer als standardmäßig eingesetzte Komponenten. Um eine dezentrale Leistungsüberwachung zu ermöglichen, kann die Anlage auch mit Leistungsmessgeräten nachgerüstet werden, welche vor die jeweiligen Verbraucher geschaltet werden. Aber auch solche Messgeräte und ihre Installation erhöhen die Gesamtkosten einer Anlage.

Da der dynamische Energieverbrauch einer Anlage auch maßgeblich durch die Automatisierung beeinflusst wird, sollte bereits beim Engineering einer Anlage dieser als Optimierungsgrundlage dienen und dementsprechend berücksichtigt werden.

Gemäß der Erfindung wird dies durch das in Anspruch 1 definierte Planungs- und Engineering-Verfahren, das Planungs- und Engineering-Software-Tool gemäß Anspruch 2 und das Planungs- und Engineering-System gemäß Anspruch 3 gelöst.

Gegenstand der Erfindung sind weiterhin ein Automatisierungssystem mit einem Planungs- und Engineering-System nach Anspruch 3 und ein Funktionsbaustein für ein Automatisierungsgerät, der nach dem Verfahren gemäß Anspruch 1, mit dem Software-Tool gemäß Anspruch 2 oder mit dem System nach Anspruch 3 erstellt worden ist.

Vorteilhafte Weiterbildungen der Erfindung sind in den Unteransprüchen angegeben.

Das erfindungsgemäße Planungs- und Engineering-Verfahren für eine prozesstechnische Anlage sieht vor, dass
- in einer Anlagenplanungsphase mittels eines Anlagenplanungswerkzeugs ein Fließschema der Anlage durch Verknüpfung von grafischen Prozessobjekten erstellt wird, welche bedien- und beobachtbare Einrichtungen der Anlage repräsentieren, und
- in einer Simulationsphase die verknüpften Prozessobjekte der Anlage oder eines Teils der Anlage mittels eines Simulationswerkzeugs importiert und der Prozess in der Anlage oder dem Teil der Anlage anhand von Simulationsmodellen, welche den importierten Prozessobjekten zugeordnet sind, simuliert wird, wobei
- für zumindest einen Teil der Prozessobjekte, welche elektrisch betriebene Einrichtungen der Anlage repräsentieren, die zugeordneten Simulationsmodelle bei ihrer Erstellung jeweils um ein Energieverbrauchsmodell ergänzt werden, das die elektrische Energieaufnahme der Einrichtung in Abhängigkeit von in der Anlage messbaren oder bekannten Prozessgrößen beschreibt, und dass
- in der Simulationsphase die elektrische Energieaufnahme der von den importierten Prozessobjekten repräsentierten Einrichtungen simuliert wird.

Bereits in der Planung (z. B. mit der Softwarelösung COMOS von Siemens) werden die durch die Automatisierung beeinflussbaren Einrichtungen (z. B. Motoren, Ventile, Pumpen, Kompressoren, Ventilatoren usw.) der prozesstechnischen Anlage als elektrische Energieverbraucher identifiziert und beim anschließenden Engineering und späteren Betrieb der Anlage entsprechend berücksichtigt. In einer simulierten Umgebung (z. B. SIMIT von Siemens) wird der Prozess durch Simulationsmodelle der Einrichtungen der Anlage nachgebildet. Damit neben dem Verhalten der Einrichtungen auch ihr Energieverbrauch bewertet werden kann, werden die Simulationsmodelle um Energieverbrauchsmodelle erweitert, mit Hilfe derer die Automatisierung auf Energieeffizienz optimiert werden kann. Die Simulation der elektrischen Energieaufnahme der Einrichtungen der Anlage basiert auf Beschreibungen der Einrichtungen und ihres Verhaltens in Abhängigkeit von Prozessgrößen, welche entweder bekannt sind oder typischerweise gemessen werden. Beispiele für solche Prozessgrößen sind Durchfluss und Druck von Stoffströmen oder Drehzahlen von rotierenden Geräten. Die Beschreibungen der Einrichtungen und ihres Verhaltens beruhen auf Informationen, wie z. B. Kennlinien, aus Datenblättern. So ist z. B. die elektrische Leistungsaufnahme einer Pumpe von Durchfluss, Druckdifferenz, Temperatur und Art des zu pumpenden Mediums abhängig und die eines Motors von, u. a., seiner Drehzahl. Auf Basis des Energieverbrauchsmodells kann nun in einer simulierten Umgebung die Automatisierung der Einrichtungen der Anlage in Bezug auf den Energieverbrauch und/oder die Energieeffizienz optimiert werden.

Das erfindungsgemäße Planungs- und Engineering-Verfahren sieht weiterhin vor, dass
- in einer Engineeringphase mittels eines Engineeringwerkzeugs ein Funktionsplan der Anlage durch Verknüpfung von Bildsymbolen von Funktionsbausteinen erstellt wird, wobei zu jedem Prozessobjekt ein Automatisierungs-Funktionsbaustein korrespondiert, der die Automatisierungsfunktion des Prozessobjekts beschreibt, und
- die Automatisierungs-Funktionsbausteine zur Ausführung in Automatisierungsgeräte der Anlage geladen werden, wobei
- für Prozessobjekte, deren zugeordnete Simulationsmodelle um ein Energieverbrauchsmodell ergänzt sind, der korrespondierende Automatisierungs-Funktionsbaustein um eine Energieverbrauchsfunktion ergänzt wird, welche durch Spezialisierung aus dem Energieverbrauchsmodells abgeleitet wird und dazu ausgebildet ist, die aktuelle elektrische Energieaufnahme der Einrichtung während ihrer Laufzeit in der Anlage zu schätzen, und
- die Automatisierungs-Funktionsbausteine zur Ausführung in Automatisierungsgeräte der Anlage geladen werden.

Nach der Optimierung des Energieverbrauch bzw. der Energieeffizienz mittels der Simulation werden die Prozessobjekte in das PLT-Engineering (z. B. PCS 7 von Siemens) übertragen. Um den Energieverbrauch auch in der realen Anlage erfassen, bewerten und langfristig beobachten zu können, werden die Funktionsbausteine der Automatisierungen um Energieverbrauchsfunktionen erweitert. Diese Energieverbrauchsfunktionen sind Spezialisierungen der oben genannten Energieverbrauchsmodelle durch Erweiterung um steuerungsspezifische Laufzeitaspekte (z. B. Organisationsbausteine, mit deren Hilfe Programmteile gezielt zur Ausführung gebracht werden und die zyklische Programmbearbeitung bewirken). Bei der Implementierung in den Automatisierungsgeräten bedeutet die Spezialisierung darüber hinaus auch eine Code-Transformation von dem Energieverbrauchsmodell (z. B. erstellt mit dem Komponententypeditor SIMIT CTE) in die Energieverbrauchsfunktion (z. B. in SCL = Structured Control Language). Diese Transformation bietet den Vorteil, dass die Energieverbrauchsfunktion nicht neu angelegt werden muss. Eingebettet in der Automatisierung berechnen die Energieverbrauchsfunktionen kontinuierlich und nebenläufig den Energieverbrauch der Einheiten während des Betriebs der Anlage anhand der Stell- und Messwerte, die in der Automatisierung verfügbar sind. Dies macht es möglich, die aktuellen Energieverbräuche einzelner Einheiten in der Anlage oder von Anlagenteilen zu schätzen, ohne dass dafür zusätzliche Sensorik notwendig ist. Damit kann auch über Einheiten ohne Energieverbrauchszähler eine Aussage über ihren Verbrauch getätigt werden, wobei der aktuelle Verbrauch z. B. durch eine Trendanzeige visualisiert und/oder in einem Langzeitarchiv abgespeichert wird. Durch Korrelationen zwischen dem Automatisierungsverhalten und dem erfassten Energieverbrauch ist ein Condition Monitoring der Anlage möglich. So führt das Ein-/Ausschalten einer Pumpe im Betrieb automatisch zu einer Zunahme/Reduktion der Energieaufnahme der Anlage. Eine Zunahme der Energieaufnahme kann ebenfalls durch einen fortgeschrittenen Verschleiß entstehen. Da durch die Automatisierungstechnik bekannt ist, welche Verbraucher eingeschaltet sind, kann zwischen normalem Verbrauch und verschleißbedingtem Verbrauch differenziert werden.

Die Erfindung ermöglicht es also, eine prozesstechnische Anlage nicht nur energieoptimal zu planen, sondern auch energieoptimal zu fahren. Zudem ermöglicht die Erfindung ein Condition Monitoring zur Laufzeit durch die Überwachung und Lokalisierung der Energieverbräuche der bedien- und beobachtbaren Einheiten in der Anlage. Die Überwachung von Trends und Leistungskennzahlen (KPIs) kann beispielsweise durch geeignete Energiemanagement-Software (z. B. SIMATIC powerrate), einer Maintenance-Station oder der Bedien- und Beobachtungseinrichtung des Automatisierungssystems erfolgen und beim Verlassen vorgegebener Toleranzbänder zu einem Alarm oder einer Instandhaltungsanweisung führen.

Zusammengefasst enthält die oben beschriebene Erfindung folgende Aspekte:
- Modellierung
   - Erzeugung von Modellen für den Energieverbrauch in einer Simulationsumgebung (z. B. SIMIT).
   - Bereitstellung von Parameter-Informationen zur Konfiguration der Energieverbrauchsmodelle durch das Planungs- und Engineering-System.
   - Nutzung von Prozessgrößen aus dem Prozessleitsystem oder Automatisierungssystem (z. B. PCS 7) als Input für die Energieverbrauchsmodelle.
- Virtuelle Optimierung des Energieverbrauches in einer Simulationsumgebung
- Überwachung und Optimierung im realen Anlagenbetrieb
   - Erweiterung der Funktionsbausteine (FBs) der Automatisierungen um Energieverbrauchsfunktionen.
   - Übertragung der Energieverbrauchsmodelle (z. B. in SIMIT CTE) in Energieverbrauchsfunktionen (z. B. in SCL) einschließlich der zugehörigen Code-Transformation.
   - Integration der gewonnenen Energieverbrauchsgrößen in übergeordnete leittechnische Systeme (DCS, MES), mit denen Optimierungen umgesetzt werden können.

Aus der oben beschriebenen Erfindung resultieren folgende Vorteile:
- In Verbindung mit einer Überwachung von Energieflüssen in einer Anlage wird eine Kosteneinsparung durch Verzicht auf zusätzliche Sensorik zur Leistungs-/Energiemessung erreicht.
- Ein aufwendiges Nachrüsten der Anlage mit zusätzlichen Sensoren und deren Integration in die Anlage entfällt.
- Ein energieoptimales Auslegen und Fahren der Anlage wird ermöglicht.
- Der Energieverbrauch kann virtuell, d.h. bereits vor der Inbetriebnahme, optimiert werden.
- Ein Monitoring der Energieflüsse über die Zeit ermöglicht zudem eine Fehler- und Verschleißerkennung an Geräten bzw. Verbrauchern in der Anlage.
- Das Automatisierungssystem enthält eigenes Energieüberwachungssystem als Teil seiner Architektur. Die online-Überwachungsbausteine werden automatisch erzeugt.
- Fehler und Ausfälle in der Anlage können während der Laufzeit vorhergesagt und verhindert werden, wenn die Simulation z. B. feststellt, dass Energieverbräuche oder elektrische Ströme vorgegebene Maximalwerte überschreiten.
- Durch Verlinken des Energieüberwachungssystem mit der Strombörse können Prozesse, z. B. Batchprozesse, kostenoptimal gefahren werden.

Im Weiteren wird die Erfindung anhand von Ausführungsbeispielen erläutert, wozu auf die Figuren der Zeichnung Bezug genommen wird; im Einzelnen zeigen:
- Figur 1: ein Beispiel für eine prozesstechnische Anlage,
- Figur 2: ein Beispiel für die Erweiterung des Simulationsmodells einer bedien- und beobachtbaren Einrichtung der Anlage um ein Energieverbrauchsmodell und
- Figur 3: ein Beispiel für die Erweiterung eines Automatisierungs-Funktionsbaustein um eine Energieverbrauchs-Funktion.

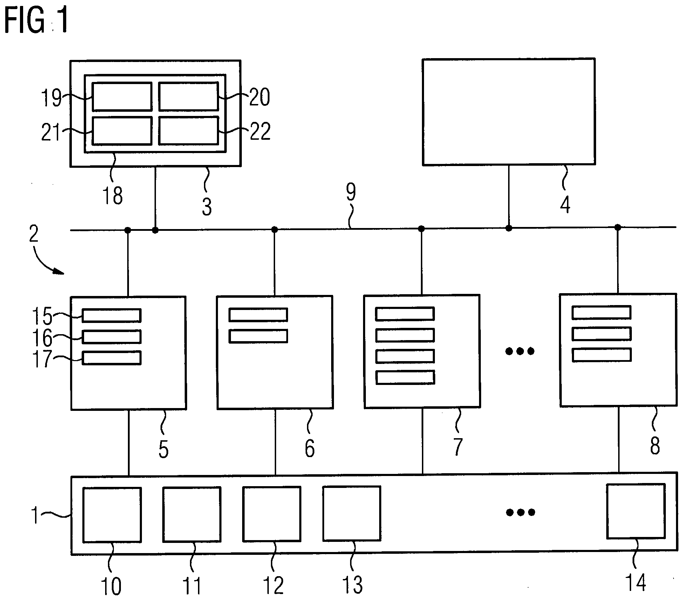

Figur 1 zeigt in vereinfachter schematischer Darstellung eine prozesstechnische Anlage, in der ein Prozess 1 mittels eines Automatisierungssystems 2 gesteuert wird. Das Automatisierungssystem enthält ein Planungs- und Engineering-System 3, ein Bedien- und Beobachtungssystem 4 und eine Vielzahl von Automatisierungsgeräten 5, 6, 7, 8 auf, die über ein Bussystem 9 miteinander verbunden sind. Die Automatisierungsgeräte 5, 6, 7, 8 steuern den technischem Prozess 1 nach Maßgabe eines Steuerprogramms, das aus einer Vielzahl von in Wechselwirkung stehenden und über die Automatisierungsgeräte 5, 6, 7, 8 verteilten Automatisierungs-Funktionsbausteinen 15, 16, 17 besteht. Die Automatisierungsgeräte 5, 6, 7, 8 sind verschiedenen bedien- und beobachtbaren Einrichtungen 10, 11, 12, 13, 14 zugeordnet, wobei z. B. der Automatisierungs-Funktionsbausteinen 15 in dem Automatisierungsgerät 5 eine Pumpe 11 steuert.

Das Planungs- und Engineering-System 3 enthält ein Planungs- und Engineering-Software-Tool 18, das aus unterschiedlichen Software-Werkzeugen, hier einem Anlagenplanungswerkzeug 19, einem Engineeringwerkzeug 20, einem Simulationswerkzeug 21 und einem Testwerkzeug 22 besteht. In Figur 1 ist das Software-Tool 18 zur besseren Anschaulichkeit als ein Block auf einer Engineering-Station 3 dargestellt. Das ist nicht so zu verstehen, dass das Software-Tool 18 nur auf einer Recheneinheit ablaufen kann; selbstverständlich kann es auf verschiedene Recheneinheiten verteilt sein. Auch können die Software-Werkzeuge 19, 20, 21, 22 einzeln oder kombiniert ausgebildet sein.

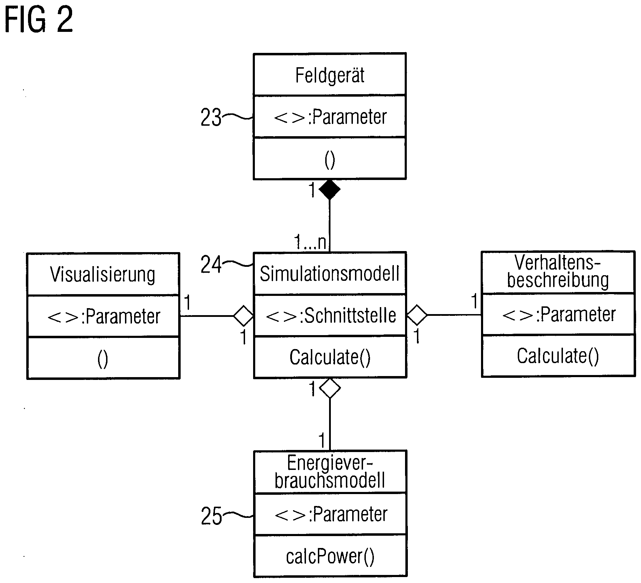

Mittels des Anlagenplanungswerkzeugs 19 wird in einer Anlagenplanungsphase ein Fließschema der Anlage durch Verknüpfung von grafischen Prozessobjekten erstellt, welche die bedien- und beobachtbaren Einrichtungen (Feldgeräte) 10, 11, 12, 13, 14 der Anlage repräsentieren. Figur 2 zeigt ein UML Klassendiagramm mit einem solchen Prozessobjekt 23. In einer Simulationsphase werden die verknüpften Prozessobjekte der Anlage oder eines Teils der Anlage mittels des Simulationswerkzeugs 21 importiert und der Prozess 1 in der Anlage oder dem Teil der Anlage anhand von Simulationsmodellen, welche den importierten Prozessobjekten zugeordnet sind, simuliert. Das hier gezeigte Prozessobjekt 23 repräsentiert einen elektrischen Verbraucher, hier z. B. eine Pumpe, weswegen das zugeordnete Simulationsmodell 24 ein Energieverbrauchsmodell 25 beinhaltet, das die elektrische Energieaufnahme der Pumpe in Abhängigkeit von in der Anlage messbaren oder bekannten Prozessgrößen beschreibt. Die Parameter zur Konfiguration des Energieverbrauchsmodells 25 werden von dem Planungs- und Engineering-Software-Tool 18 bereitgestellt.

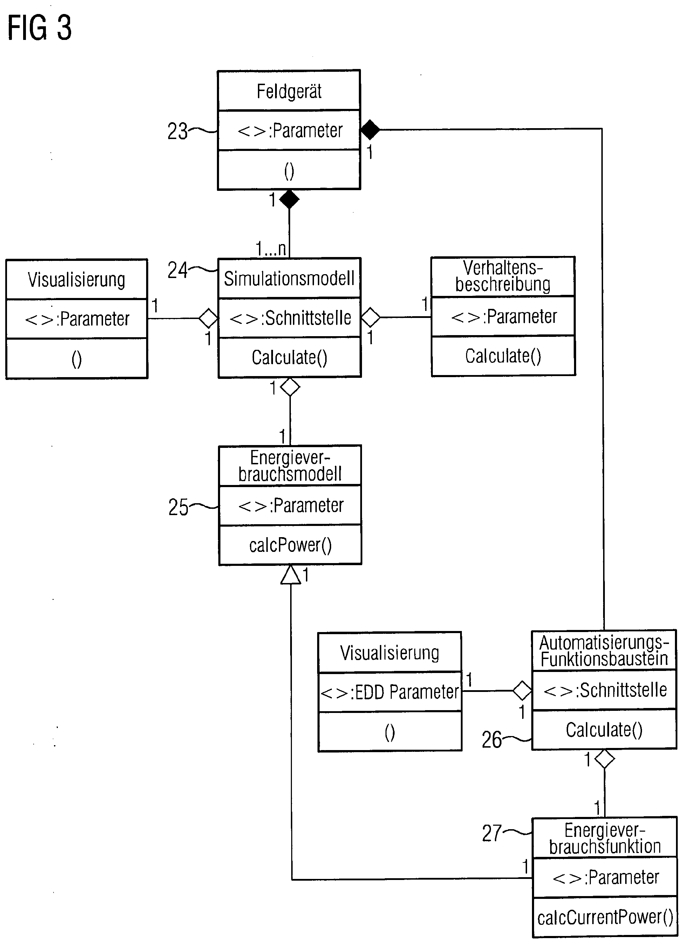

In einer Engineeringphase wird mittels des Engineeringwerkzeugs 20 ein Funktionsplan der Anlage durch Verknüpfung von Bildsymbolen von Funktionsbausteinen erstellt wird, wobei, wie Figur 3 zeigt, zu jedem Prozessobjekt 23 ein Automatisierungs-Funktionsbaustein 26 korrespondiert, der die Automatisierungsfunktion des Prozessobjekts 23 beschreibt. Der Automatisierungs-Funktionsbaustein 26 enthält eine Energieverbrauchsfunktion 27, die eine Spezialisierung des Energieverbrauchsmodells 25 bildet und die elektrische Energieaufnahme zur Laufzeit der von dem Prozessobjekt 23 repräsentierten Einrichtung beschreibt. Nachdem alle Funktionen im Funktionsplan erstellt worden sind, übersetzt das Planungs- und Engineering-System 3 die Software der Funktionsbausteine in ein für die Automatisierungsgeräte 5, 6, 7, 8 der Anlage lesbares Steuerprogramm (Maschinencode), das in die Automatisierungsgeräte 5, 6, 7, 8 geladen und dort im Rahmen der Steuerung des technischen Prozesses 1 ausgeführt wird.

## Patentansprüche

1. Planungs- und Engineering-Verfahren für eine prozesstechnische Anlage, bei dem
- in einer Anlagenplanungsphase mittels eines Anlagenplanungswerkzeugs (19) ein Fließschema der Anlage durch Verknüpfung von grafischen Prozessobjekten (23) erstellt wird, welche bedien- und beobachtbare Einrichtungen (10-14) der Anlage repräsentieren,
- in einer Simulationsphase die verknüpften Prozessobjekte der Anlage oder eines Teils der Anlage mittels eines Simulationswerkzeugs (21) importiert und der Prozess (1) in der Anlage oder dem Teil der Anlage anhand von Simulationsmodellen (24), welche den importierten Prozessobjekten (23) zugeordnet sind, simuliert wird,
- in einer Engineeringphase mittels eines Engineeringwerkzeugs (20) ein Funktionsplan der Anlage durch Verknüpfung von Bildsymbolen von Funktionsbausteinen erstellt wird, wobei zu jedem Prozessobjekt (23) ein Automatisierungs-Funktionsbaustein (26) korrespondiert, der die Automatisierungsfunktion des Prozessobjekts (23) beschreibt, und
- die Automatisierungs-Funktionsbausteine (26) zur Ausführung in Automatisierungsgeräte (5-8) der Anlage geladen werden, wobei
- für zumindest einen Teil der Prozessobjekte (23), welche elektrisch betriebene Einrichtungen (10-14) der Anlage repräsentieren, die zugeordneten Simulationsmodelle (24) bei ihrer Erstellung jeweils um ein Energieverbrauchsmodell (25) ergänzt werden, das die elektrische Energieaufnahme der Einrichtung (10-14) in Abhängigkeit von in der Anlage messbaren oder bekannten Prozessgrößen beschreibt,
- in der Simulationsphase die elektrische Energieaufnahme der von den importierten Prozessobjekten (23) repräsentierten Einrichtungen (10-14) simuliert wird, und
- für Prozessobjekte (23), deren zugeordnete Simulationsmodelle (24) um ein Energieverbrauchsmodell (25) ergänzt sind, der korrespondierende Automatisierungs-Funktionsbaustein (26) um eine Energieverbrauchsfunktion (27) ergänzt wird, welche durch Spezialisierung aus dem Energieverbrauchsmodell (25) abgeleitet wird und dazu ausgebildet ist, die aktuelle elektrische Energieaufnahme der Einrichtung (10-14) während ihrer Laufzeit in der Anlage zu schätzen.

2. Planungs- und Engineering-Software-Tool (18) für eine prozesstechnische Anlage, beinhaltend
- ein Anlagenplanungswerkzeug (19), das dazu ausgebildet ist, in einer Anlagenplanungsphase ein Fließschema der Anlage durch Verknüpfung von grafischen Prozessobjekten (23) zu erstellen, welche bedien- und beobachtbare Einrichtungen (10-14) der Anlage repräsentieren,
- ein Simulationswerkzeug (21), das dazu ausgebildet ist, in einer Simulationsphase die verknüpften Prozessobjekte (23) der Anlage oder eines Teils der Anlage zu importieren und den Prozess (1) in der Anlage oder dem Teil der Anlage anhand von Simulationsmodellen (24), welche den importierten Prozessobjekten (23) zugeordnet sind, zu simulieren, und
- ein Engineeringwerkzeug (20), das dazu ausgebildet ist, in einer Engineeringphase einen Funktionsplan der Anlage durch Verknüpfung von Bildsymbolen von Funktionsbausteinen zu erstellen, wobei zu jedem Prozessobjekt (23) ein Automatisierungs-Funktionsbaustein (26) korrespondiert, der die Automatisierungsfunktion des Prozessobjekts (23) beschreibt, und ferner dazu ausgebildet ist, die Automatisierungs-Funktionsbausteine (26) zur Ausführung in Automatisierungsgeräte (5-8) der Anlage zu laden, wobei
- für zumindest einen Teil der Prozessobjekte (23), welche elektrisch betriebene Einrichtungen (10-14) der Anlage repräsentieren, die zugeordneten Simulationsmodelle (24) jeweils um ein Energieverbrauchsmodell (25) ergänzt sind, das die elektrische Energieaufnahme der Einrichtung (10-14) in Abhängigkeit von in der Anlage messbaren oder bekannten Prozessgrößen beschreibt,
- das Simulationswerkzeug (21) ferner dazu ausgebildet ist, in der Simulationsphase die elektrische Energieaufnahme der von den importierten Prozessobjekten (23) repräsentierten Einrichtungen (10-14) zu simulieren, und
- für Prozessobjekte (23), deren zugeordnete Simulationsmodelle (24) um ein Energieverbrauchsmodell (25) ergänzt sind, der korrespondierende Automatisierungs-Funktionsbaustein (26) um eine Energieverbrauchsfunktion (27) ergänzt ist, welche eine Spezialisierung des Energieverbrauchsmodells (25) darstellt und dazu ausgebildet ist, die aktuelle elektrische Energieaufnahme der Einrichtung (10-14) während ihrer Laufzeit in der Anlage zu schätzen.

3. Planungs- und Engineering-System (3) für eine prozesstechnische Anlage, das dazu ausgebildet ist,
- in einer Anlagenplanungsphase ein Fließschema der Anlage durch Verknüpfung von grafischen Prozessobjekten (23) zu erstellen, welche bedien- und beobachtbare Einrichtungen (10-14) der Anlage repräsentieren,
- in einer Simulationsphase den Prozess (1) in der Anlage oder einem Teil der Anlage anhand von Simulationsmodellen (24), welche den Prozessobjekten (23) zugeordnet sind, zu simulieren, und
- in einer Engineeringphase einen Funktionsplan der Anlage durch Verknüpfung von Bildsymbolen von Funktionsbausteinen zu erstellen, wobei zu jedem Prozessobjekt (23) ein Automatisierungs-Funktionsbaustein (26) korrespondiert, der die Automatisierungsfunktion des Prozessobjekts (23) beschreibt, und die Automatisierungs-Funktionsbausteine (26) zur Ausführung in Automatisierungsgeräte (5-8) der Anlage zu laden, wobei
- für zumindest einen Teil der Prozessobjekte (23), welche elektrisch betriebene Einrichtungen (10-14) der Anlage repräsentieren, die zugeordneten Simulationsmodelle (24) jeweils um ein Energieverbrauchsmodell (25) ergänzt sind, das die elektrische Energieaufnahme der Einrichtung (10-14) in Abhängigkeit von in der Anlage messbaren oder bekannten Prozessgrößen beschreibt, und
- das Planungs- und Engineering-System (3) ferner dazu ausgebildet ist, in der Simulationsphase die elektrische Energieaufnahme der von den importierten Prozessobjekten (23) repräsentierten Einrichtungen (10-14) zu simulieren, und
- für Prozessobjekte (23), deren zugeordnete Simulationsmodelle (24) um ein Energieverbrauchsmodell (25) ergänzt sind, der korrespondierende Automatisierungs-Funktionsbaustein (26) um eine Energieverbrauchsfunktion (27) ergänzt ist, welche eine Spezialisierung des Energieverbrauchsmodells (25) darstellt und dazu ausgebildet ist, die aktuelle elektrische Energieaufnahme der Einrichtung (10-14) während ihrer Laufzeit in der Anlage zu schätzen.

4. Automatisierungssystem (2) für eine prozesstechnische Anlage mit einem Planungs- und Engineering-System (3) nach Anspruch 3.

5. Automatisierungssystem (2) nach Anspruch 4, bei dem die in die in die Automatisierungsgeräte (5-8) geladenen Automatisierungs-Funktionsbausteine (26) mittels der Energieverbrauchsfunktion (27) die aktuelle elektrische Energieaufnahme der Einrichtungen (10-14) im laufenden Betrieb der Anlage ermitteln.

6. Automatisierungssystem (2) nach Anspruch 5, das dazu ausgebildet ist, durch Korrelationen zwischen dem Automatisierungsverhalten und den ermittelten Energieverbräuchen eine Zustandsüberwachung (Condition Monitoring) der Anlage vorzunehmen.

7. Funktionsbaustein (26) für ein Automatisierungsgerät (5-8), der nach dem Verfahren gemäß Anspruch 1, mit dem Software-Tool (18) gemäß Anspruch 2 oder mit dem System (2) nach Anspruch 3 erstellt worden ist.

## Claims

1. Planning and engineering method for a process plant with which
- in a plant planning phase, a flow chart of the plant is compiled by means of a plant planning tool (19) by linking graphic process objects (23) representing operator-controllable and observable facilities (10-14) of the plant,
- in a simulation phase, the linked process objects of the plant or a part of the plant are imported by means of a simulation tool (21) and the process (1) in the plant or the part of the plant is simulated with reference to simulation models (24) assigned to the imported process objects (23),
- in an engineering phase, an engineering tool (20) is used to compile a function chart of the plant by linking icons of function blocks, wherein each process object (23) has a corresponding automation function block (26) describing the automation function of the process object (23) and
- the automation function blocks (26) are loaded into automation devices (5-8) of the plant for implementation, wherein
- for at least a part of the process objects (23) representing electrically operated facilities (10-14) of the plant, the assigned simulation models (24) are each supplemented by an energy consumption model (25) describing the electrical energy consumption of the facility (10-14) as a function of measurable or known process variables in the plant,
- in the simulation phase, the electrical energy consumption of the facilities (10-14) represented by the imported process objects (23) is simulated and
- for process objects (23) for which the assigned simulation models (24) are supplemented by an energy consumption model (25), the corresponding automation function block (26) is supplemented by an energy consumption function (27) which is derived by specialisation from the energy consumption model (25) and is embodied to estimate the current electrical energy consumption of the facility (10-14) during its running time in the plant.

2. Planning and engineering software tool (18) for a process plant including
- a plant planning tool (19) embodied to compile, in a plant planning phase, a flow chart of the plant by linking graphic process objects (23) representing operator-controllable and observable facilities (10-14) of the plant,
- a simulation tool (21), which is embodied, in a simulation phase, to import the linked process objects (23) of the plant or of a part of the plant and to simulate the process (1) in the plant or the part of the plant with reference to simulation models (24) assigned to the imported process objects (23) and
- an engineering tool (20), which is embodied, in an engineering phase, to compile a function chart of the plant by linking icons of function blocks, wherein an automation function block (26) describing the automation function of the process object (23) corresponds to each process object (23) and is moreover embodied to load the automation function blocks (26) into automation devices (5-8) of the plant for implementation, wherein
- for at least a part of the process objects (23) representing electrically operated facilities (10-14) of the plant, the assigned simulation models (24) are each supplemented by an energy consumption model (25) describing the electrical energy consumption of the facility (10-14) as a function of measurable or known process variables in the plant,
- the simulation tool (21) is moreover embodied, in the simulation phase, to simulate the electrical energy consumption of the facilities (10-14) represented by the imported process objects (23) and
- for process objects (23) for which the assigned simulation models (24) are supplemented by an energy consumption model (25), the corresponding automation function block (26) is supplemented by an energy consumption function (27) representing a specialisation of the energy consumption model (25) and which is embodied to estimate the current electrical energy consumption of the facility (10-14) during its running time in the plant.

3. Planning and engineering system (3) for a process plant, which is embodied,
- in a plant planning phase, to compile a flow chart of the plant by linking graphic process objects (23) representing operator-controllable and observable facilities (10-14) of the plant,
- in a simulation phase, to simulate the process (1) in the plant or a part of the plant with reference to simulation models (24) assigned to the process objects (23) and
- in an engineering phase, to compile a function chart of the plant by linking icons of function blocks, wherein an automation function block (26) describing the automation function of the process object (23) corresponds to each process object (23) and to load the automation function blocks (26) into automation devices (5-8) of the plant for implementation, wherein
- for at least a part of the process objects (23) representing electrically operated facilities (10-14) of the plant, the assigned simulation models (24) are each supplemented by an energy consumption model (25) describing the electrical energy consumption of the facility (10-14) as a function of measurable or known process variables in the plant and
- the planning and engineering system (3) is moreover embodied, in the simulation phase, to simulate the electrical energy consumption of the facilities (10-14) represented by the imported process objects (23) and
- for process objects (23) for which the assigned simulation models (24) are supplemented by an energy consumption model (25), the corresponding automation function block (26) is supplemented by an energy consumption function (27) representing a specialisation of the energy consumption model (25) and which is embodied to estimate the current electrical energy consumption of the facility (10-14) during its running time in the plant.

4. Automation system (2) for a process plant with a planning and engineering system (3) according to claim 3.

5. Automation system (2) according to claim 4 with which the automation function blocks (26) loaded into the automation devices (5-8) use the energy consumption function (27) to determine the current electrical energy consumption of the facilities (10-14) during the operation of the plant.

6. Automation system (2) according to claim 5, which is embodied to carry out condition monitoring of the plant by correlations between the automation behaviour and the determined energy consumption.

7. Function block (26) for an automation device (5-8) compiled in accordance with the method claimed in claim 1, with the software tool (18) according to claim 2 or with the system (2) according to claim 3.

## Revendications

1. Procédé de planification et d'ingénierie pour une installation technique de processus, dans lequel
- dans une phase de planification de l'installation, on établit, au moyen d'un outil (19) de planification d'installation, un schéma de circulation de l'installation par combinaison d'objets de processus (23) graphiques, qui représentent des dispositifs (10 à 14) de service et observables,
- dans une phase de simulation, on importe des objets de processus combinés de l'installation ou d'une partie de l'installation au moyen d'un outil (21) de simulation et on simule le processus (1) dans l'installation ou dans la partie de l'installation à l'aide de modèles (24) de simulation, qui sont associés aux objets de processus (23) importés,
- dans une phase d'ingénierie, on établit, au moyen d'un outil (20) d'ingénierie, un plan de fonction de l'installation par combinaison de pictogrammes de modules de fonction, dans lequel à chaque objet de processus (23) correspond un module (26) de fonction d'automatisation, qui décrit la fonction d'automatisation de l'objet de processus (23) et
- on charge les modules (26) de fonction d'automatisation pour la réalisation dans des appareils (5 à 8) d'automatisation de l'installation, dans lequel
- pour au moins une partie des objets de processus (23), qui représentent des dispositifs (10 à 14) fonctionnant à l'électricité de l'installation, on complète les modèles (24) de simulation associés, lorsqu'ils sont établis, respectivement, d'un modèle (25) de consommation d'énergie, qui décrit l'absorption d'énergie électrique du dispositif (10 à 14) en fonction de grandeurs de processus mesurables dans l'installation ou connues,
- dans la phase de simulation, on simule l'absorption d'énergie électrique du dispositif (10 à 14) représenté par les objets de processus (23) importés et
- pour des objets de processus (23), dont les modèles (24) de simulation associés ont été complétés d'un modèle (25) de consommation d'énergie, on complète le module (26) de fonction d'automatisation correspondant d'une fonction (27) de consommation d'énergie, que l'on déduit par spécialisation du modèle (25) de consommation d'énergie et qui est constituée pour estimer l'absorption d'énergie électrique instantanée du dispositif (10 à 14) pendant son temps de marche dans l'installation.

2. Outil (18) logiciel de planification et d'ingénierie pour une installation technique de processus, comportant
- un outil (19) de planification d'installation, constitué pour établir, dans une phase de planification de l'installation, un schéma de circulation de l'installation par combinaison d'objets de processus (23) graphique, qui représentent des dispositifs (10 à 14) de service et observables de l'installation,
- un outil (21) de simulation, constitué pour importer, dans une phase de simulation, les objets de processus (23) combinés de l'installation ou d'une partie de l'installation et pour simuler le processus (1) dans l'installation ou dans la partie de l'installation, à l'aide de modèles (24) de simulation, qui sont associés aux objets de processus (23) importés et
- un outil (20) d'ingénierie, constitué pour établir, dans une phase d'ingénierie, un plan de fonction de l'installation, par combinaison de pictogrammes de modules de fonction, dans lequel, à chaque objet de processus (23) correspond un module (26) de fonction d'automatisation, qui décrit la fonction d'automatisation de l'objet de processus (23) et qui est constitué, en outre, pour charger les modules (26) de fonction d'automatisation pour l'exécution dans des appareils (5 à 8) d'automatisation de l'installation, dans lequel
- pour au moins une partie des objets de processus (23), qui représentent des dispositifs (10 à 14) fonctionnant à l'électricité de l'installation, on complète les modèles (24) de simulation associés, lorsqu'ils sont établis, respectivement, d'un modèle (25) de consommation d'énergie, qui décrit l'absorption d'énergie électrique du dispositif (10 à 14) en fonction de grandeurs de processus mesurables dans l'installation ou connues,
- l'outil (21) de simulation est constitué, en outre, pour simuler dans la phase de simulation l'absorption d'énergie électrique des dispositifs (10 à 14) représentés par les objets de processus (23) importés et
- pour des objets (23) de processus, dont les modèles (24) de simulation associés sont complétés d'un modèle (25) de consommation d'énergie, le module (26) de fonction d'automatisation correspondant est complété d'une fonction (27) de consommation d'énergie, qui représente une spécialisation du modèle (25) de consommation d'énergie et qui est constituée pour estimer l'absorption d'énergie électrique instantanée du dispositif (10 à 14) pendant son temps de marche dans l'installation.

3. Système (3) de planification et d'ingénierie pour une installation technique de processus, constitué pour
- établir, dans une phase de planification de l'installation, un schéma de circulation de l'installation par combinaison d'objets de processus (23) graphiques, qui représentent des dispositifs (10 à 14) de services et observables de l'installation,
- dans une phase de simulation, simuler le processus (1) dans l'installation ou dans une partie de l'installation, à l'aide de modèles (24) de simulation, qui sont associés aux objets de processus (23) et
- dans une phase d'ingénierie, établir un plan de fonction de l'installation par combinaison de pictogrammes de modules de fonction, dans lequel, à chaque objet de processus (23) correspond un module (26) de fonction d'automatisation, qui décrit la fonction d'automatisation de l'objet de processus (23), et charger les modules (26) de fonction d'automatisation pour l'exécution dans des appareils (5 à 8) d'automatisation de l'installation, dans lequel
- pour au moins une partie des objets de processus (23), qui représentent des dispositifs (10 à 14) fonctionnant à l'électricité de l'installation, on complète les modèles (24) de simulation, associés lorsqu'ils sont établis, respectivement, d'un modèle (25) de consommation d'énergie, qui décrit l'absorption d'énergie électrique du dispositif (10 à 14) en fonction de grandeurs de processus mesurables dans l'installation ou connues et
- le système (3) de planification et d'ingénierie est constitué, en outre, pour simuler, dans la phase de simulation, l'absorption d'énergie électrique des dispositifs (10 à 14) représentés par les objets de processus (23) importés et
- pour des objets (23) de processus, dont les modèles (24) de simulation associés sont complétés d'un modèle (25) de consommation d'énergie, le module (26) de fonction d'automatisation correspondant est complété d'une fonction (27) de consommation d'énergie, qui représente une spécialisation du modèle (25) de consommation d'énergie et qui est constituée pour estimer l'absorption d'énergie électrique instantanée du dispositif (10 à 14) pendant son temps de marche dans l'installation.

4. Système (2) d'automatisation pour une installation technique de processus, comprenant un système (3) de planification et d'ingénierie suivant la revendication 3.

5. Système (2) d'automatisation suivant la revendication 4, dans lequel les modules (26) de fonction d'automatisation chargés dans les appareils (5 à 8) d'automatisation déterminent, au moyen de la fonction (27) de consommation d'énergie, l'absorption d'énergie électrique instantanée des dispositifs (10 à 14) pendant le fonctionnement de l'installation.

6. Système (2) d'automatisation suivant la revendication 5, constitué pour prévoir, par des corrélations entre le comportement d'automatisation et les consommations d'énergie déterminées, un contrôle d'état (condition monitoring) de l'installation.

7. Module (26) de fonction pour un appareil (5 à 8) d'automation, qui a été établi par le procédé suivant la revendication 1 avec l'outil (18) de logiciel suivant la revendication 2 ou avec le système (2) suivant la revendication 3.
